# EUROPÄISCHE PATENTSCHRIFT

(11) **EP 3 510 303 B1**
(45) Veröffentlichungstag und Bekanntmachung des Hinweises auf die Patenterteilung: **15.07.2020**
(21) Anmeldenummer: 17768023.8
(22) Anmeldetag: 30.08.2017
(51) Int. Cl.: F16F 9/38, F16F 9/04, F16F 9/05

(54) **LUFTFEDEREINHEIT MIT GETEILTER AUSSENFÜHRUNG**
AIR SPRING UNIT HAVING A DIVIDED OUTER GUIDE
ENSEMBLE RESSORT PNEUMATIQUE À GUIDAGE EXTERNE DIVISÉ

(30) Priorität: 06.09.2016 DE 102016216910
(43) Veröffentlichungstag der Anmeldung: 17.07.2019
(73) Patentinhaber: Continental Teves AG & Co. OHG, 60488 Frankfurt am Main (DE)
(72) Erfinder: PIELOCK, Ralf, 29690 Essel (DE)
(86) Internationale Anmeldenummer: PCT/EP2017/071758
(87) Internationale Veröffentlichungsnummer: WO 2018/046367

(56) Entgegenhaltungen:
- DE-A1-102006 005 459
- DE-A1-102007 004 035
- DE-A1-102011 119 206
- DE-U1- 20 022 663
- DE-U1- 29 823 508

## Beschreibung

Die Erfindung betrifft eine Luftfedereinheit gemäß dem Oberbegriff von Anspruch 1.

Eine Luftfedereinheit, wie sie beispielsweise aus der DE 198 34 092 A1 bekannt ist, wird zwischen dem Kraftfahrzeugfahrwerk bzw. einem Radträger und der Kraftfahrzeugkarosserie angeordnet. In der Regel umfasst die Luftfedereinheit eine Luftfeder und einen Stoßdämpfer. Die Luftfeder erfüllt dabei die Funktion das Rad abzufedern, währenddessen der Stoßdämpfer die Schwingungen des Rades bzw. der Kraftfahrzeugkarosserie dämpft.

Die Luftfeder besteht im Wesentlichen aus einem Luftfederdeckel, einem Luftfederkolben und einem dazwischen eingespannten Rollbalg, durch den ein unter Luftdruck stehender Arbeitsraum teilweise begrenzt wird. Über den Luftfederdeckel wird die Luftfedereinheit mittels entsprechender Befestigungsmittel mit der Kraftfahrzeugkarosserie verbunden.

Um einen möglichst angenehmen Fahrkomfort zu ermöglichen, muss die Luftfederkennung der Luftfeder entsprechend abgestimmt werden. Dazu werden möglichst dünnwandige Rollbälge eingesetzt, da diese einen hohen Abrollkomfort sicherstellen. Um bei diesen allerdings eine genügende Tragfähigkeit des Gesamtsystems zu erreichen, wird der Rollbalg bzw. die Luftfeder mit einer Außenführung versehen, welche als Stützkorsett den Rollbalg hülsenförmig umschließt. So lässt sich beispielsweise ein dünner Rollbalg mit einer dünnen Leichtmetallhülse auf hohe Innendrücke und damit auf eine hohe Tragfähigkeit optimieren, bei gleichzeitig vorteilhaftem Harshness-Verhalten. Die Außenführung ist dabei derart ausgebildet und angeordnet, dass der Rollbalg beim Einfedern einerseits an der Außenseite des konzentrischen Abrollkolbens und andererseits an der Innenfläche der Außenführung abrollt.

Der innerhalb der Luftfeder angeordnete Stoßdämpfer ist einerseits mit dem Radträger verbunden und andererseits über seine Dämpferstange mit einem Dämpferlager im Luftfederdeckel befestigt bzw. gelagert, wodurch die vom Rad ausgehenden Kräfte bzw. Schwingungen in die Karosserie gedämpft werden. Beim Einfedern des Fahrzeugrades entgegen der Fahrzeugkarosserie kommt es zu Schwenkbewegungen der Luftfeder zusammen mit der Außenführung gegenüber dem Abrollkolben. Dadurch wird die untere Rollfalte der Luftfeder an den Abrollkolben gepresst, wodurch eine radiale Kraft auf das Dämpferrohr bzw. den Stoßdämpfer übertragen wird. Auch bei einer Kurvenfahrt wirken direkte Querkräfte auf den Stoßdämpfer ein, welche bestmöglich durch das Dämpferlager aufgenommen werden sollen. Auf den Stoßdämpfer wirken deshalb ungewollte Kräfte, welche zu einer erhöhten Reibung zwischen Dämpferstange und Dämpferrohr führen, wobei infolge dessen es zu einem höheren Verschleiß und einem schnelleren Ausfall des Stoßdämpfers kommt. Um den Stoßdämpfer weniger zu belasten, gilt es die Schwenkbewegungen der Luftfeder möglichst nicht auf den Abrollkolben zu übertragen und die Querkräfte zu mindern.

Um die Schwenkbewegungen der Luftfeder zu reduzieren kann ein kardanisches Lager in Form einer weiteren Rollfalte am Luftfederdeckel vorgesehen werden, wie es aus der DE 101 11 242 C1 bekannt ist. Dabei liegt die obere Rollfalte/Kardanikfalte, zumindest über einen Teil des Federweges der Luftfeder, mit ihrer axialen Stirnseite an der Unterseite des Luftfederdeckels an. Das dadurch geschaffene kardanische Lager ermöglicht es der Luftfeder sich gegenüber dem Stoßdämpfer zu verschwenken, wobei die Rollfalte dem nur einen geringen Widerstand entgegensetzt. Im Fahrbetrieb ist der Rollbalg aufgrund der kinematischen Achsbewegungen zwischen Luftfederdeckel und Luftfederkolben auch einer Torsionsbewegung unterlegen. Dabei droht der Rollbalg, welcher meist aus Festigkeitsträgern verstärkt ist, beschädigt zu werden. Die Luftfeder aus der DE 10 2012 201 104 A1 weist deswegen beispielsweise ein Faltensystem auf, welches unterhalb des Luftfederdeckels vorgesehen ist. Dieses Faltensystem dient dem Torsionsausgleich und ist zusätzlich auch als Kardanikfalte wirksam. Unterstützt wird dies durch einen Hybridbalg, welcher mittels Festigkeitsträgern zu einem als Kreuzlagenbalg und zum anderen als Axialbalg verstärkt ist. Im Abrollbereich am Luftfederkolben verlaufen die Gewebefestigkeitsträger Überkreuz, wodurch ein robuster Rollbalgabschnitt realisiert ist. Zur Verringerung der Torsionssteifigkeit sind die Gewebefestigkeitsträger im Bereich des Faltensystems parallel zur Längsachse der Luftfedereinheit ausgerichtet. Der weiche Rollbalgabschnitt kann dadurch die Torsionsbewegungen ausgeleichen. Eine ähnliche Luftfeder ist in der Gebrauchsmusterschrift DE20022663 U1 beschrieben.

Nachteilig ist allerdings, dass sich die Luftfeder samt Außenführung beim Einfedern gegenüber dem Abrollkolben verschwenkt und dadurch die untere Rollfalte nachwievor an den Abrollkolben gepresst wird. Die Kardanikfalte im Bereich des Luftfederdeckels kann dies nur geringfügig vermindern.

Es ist Aufgabe der Erfindung eine Luftfedereinheit mit verbesserter Quersteifigkeit und effektiver Torsionsaufnahme bereitzustellen.

Die der Erfindung zugrundeliegende Aufgabe wird mit den Merkmalen des unabhängigen Patentanspruchs gelöst.

Es wird eine Luftfedereinheit für ein Fahrwerk eines Kraftfahrzeugs bereitgestellt, welche einen Luftfederdeckel und einen Luftfederkolben umfasst, wobei zwischen dem Luftfederdeckel und dem Luftfederkolben ein luftdicht befestigter Rollbalg aus elastomerem Material teilweise einen mit Druckluft befüllbaren Arbeitsraum begrenzt, wobei der Rollbalg von einer geteilten hülsenförmigen Außenführung mit einem ersten Außenführungsteil und einem zweiten Außenführungsteil umschlossen ist. Bevorzugt ist die Außenführung in Umfangsrichtung unterbrochen.

Bevorzugt ist eine in mehr als zwei Teile unterbrochene Außenführung vorgesehen.

Beim Einfedern bzw. Verschwenken einer Luftfeder gemäß dem Stand der Technik wird die Rollfalte am Luftfederkolben durch eine einteilige Außenführung gegen den Luftfederkolben gepresst, wodurch eine nachteilige Kraft auf diesen ausgeübt wird. Die erfindungsgemäße geteilte Außenführung vermindert das Verpressen der unteren Rollfalte des Rollbalgs gegenüber den Luftfederkolben wesentlich. Beim Einfedern verschwenken sich die beiden Außenführungsteile mit unterschiedlichen Winkeln zueinander, wodurch die untere Rollfalte nur noch geringfügig bis gar nicht gegen den Luftfederkolben gepresst wird. D.h. die unterschiedliche kardanische Auslenkung beider Außenführungsteile bewirkt eine wesentlich verbesserte Quersteifigkeit der Luftfedereinheit.

Erfindungsgemäß bildet der Rollbalg zwischen dem ersten und dem zweiten Außenführungsteil eine Torsionsfalte aus. Somit ist im mittleren Bereich der Luftfeder ein Torsionspunkt geschaffen, welcher eine vorteilhafte Torsionsaufnahme bei Verdrehung der Luftfeder um deren Längsache ermöglicht. Zugleich ist die Torsionsfalte als kardanisches Lager wirksam und führt zu einem positiven Querkraftausgleich.

Durch den Innendruck im Arbeitsraum ist die Torsionsfalte nach außen ausgebildet.

Bevorzugt ist die Torsionsfalte mit einem Axialbalg ausgebildet. Durch den weichen Axialbalg weist die Torsionsfalte eine vorteilhaftere Torsionsaufnahmefähigkeit auf. Ebenfalls ist der Axialbalg auch für die kardanische Auslenkung vorteilhaft. Vorzugsweise kann die Torsionsfalte mittels eines Rings zu einem Faltensystem eingeschnürt werden, welches die kardanische Auslenkung verbessert. Der Ring kann dabei außen am Balg angeordnet oder im Balg einvulkanisiert sein.

Nach einer alternativen Ausführungsform ist der Rollbalg als erweiterter Hybridbalg mit einem Kreuzlagenbalg im Bereich des ersten und des zweiten Außenführungsteils ausgebildet, wobei der Rollbalg im Bereich der Torsionsfalte als Axialbalg ausgebildet ist. Den Rollbalg im unteren und oberen Bereich mit einem Kreuzlagenbalg auszuführen, führt zu einem robusten Rollbalg, welcher dennoch eine weiche Torsionsfalte aufweist und deren positiven Eigenschaften mitbringt.

Nach einer alternativen bevorzugten Ausführungsform ist der Rollbalg als Hybridbalg mit einem Kreuzlagenbalg im Bereich des ersten Außenführungsteils und mit einem Axialbalg im Bereich des zweiten Außenführungsteils ausgebildet. Der Hybridbalg kombiniert die Vorteile beider Ausgestaltungsmöglichkeiten der eingebetteten Festigkeitsträger, um eine sehr komfortable und robuste Luftfeder bereitzustellen.

Nach einer weiteren bevorzugten Ausführungsform sind das erste Außenführungsteil mittels eines ersten Innenspannrings und/oder das zweite Außenführungsteil mittels eines zweiten Innenspannrings am Rollbalg befestigbar.

Nach einer weiteren bevorzugten Ausführungsform lässt sich auch das erste Außenführungsteil und/oder das zweite Außenführungsteil mit dem Rollbalg verkleben.

Nach einer weiteren bevorzugten Ausführungsform ist das erste Außenführungsteil in einem Bereich einer ersten Rollfalte des Rollbalgs an dem Luftfederkolben vorgesehen. Indem das untere Außenführungsteil von dem oberen Außenführungsteil losgelöst ist, führt das untere Außenführungsteil beim Einfedern nicht die komplette Verschwenkung mit aus. Das untere Außenführungsteil bewegt sich nahezu parallel zu dem Luftfederkolben.

Nach einer weiteren bevorzugten Ausführungsform ist das zweite Außenführungsteil in einem Bereich einer zweiten Rollfalte an dem Luftfederdeckel vorgesehen. Bei der Ausführungsform einer Luftfeder mit zwei Rollfalten stellt das obere Außenführungsteil eine Führung für die obere Rollfalte zur Verfügung.

Bei der Ausführungsform einer Luftfeder ohne obere Rollfalte ist es nach einer bevorzugten Ausführungsform möglich, dass das zweite Außenführungsteil einen Teil des Luftfederdeckels und einen Teil des Rollbalgs gemeinsam umschließt.

Bei einer alternativen Ausführungsform ist das zweite Außenführungsteil zwischen einer Klemmung des Rollbalgs an dem Luftfederdeckel und dem ersten Außenführungsteil angeordnet.

Nach einer weiteren bevorzugten Ausführungsform umfasst die Luftfedereinheit einen integrierten Stoßdämpfer, wobei das zweite Außenführungsteil beim Einfedern der Luftfedereinheit im Wesentlichen parallel zum Stoßdämpfer ausgerichtet bleibt. Beim Einfedern verschwenken sich die beiden Außenführungsteile mit unterschiedlichen Winkeln zueinander, wodurch die untere Rollfalte nur noch geringfügig bis gar nicht gegen den Luftfederkolben gepresst wird und damit keine nachteiligen Querkräfte auf den Stoßdämpfer mehr einwirken.

Verwendung findet die Luftfedereinheit in einem Fahrwerk, vorzugsweise in einem Luftfedersystem, für ein Kraftfahrzeug.

Weitere bevorzugte Ausführungsformen der Erfindung ergeben sich aus den Unteransprüchen und der nachfolgenden Beschreibung von Ausführungsbeispielen an Hand der Figuren.

Es zeigen
- Fig. 1: eine erste beispielsgemäße Luftfedereinheit,
- Fig. 2: eine zweite beispielsgemäße Luftfedereinheit und
- Fig. 3: eine dritte beispielsgemäße Luftfedereinheit.

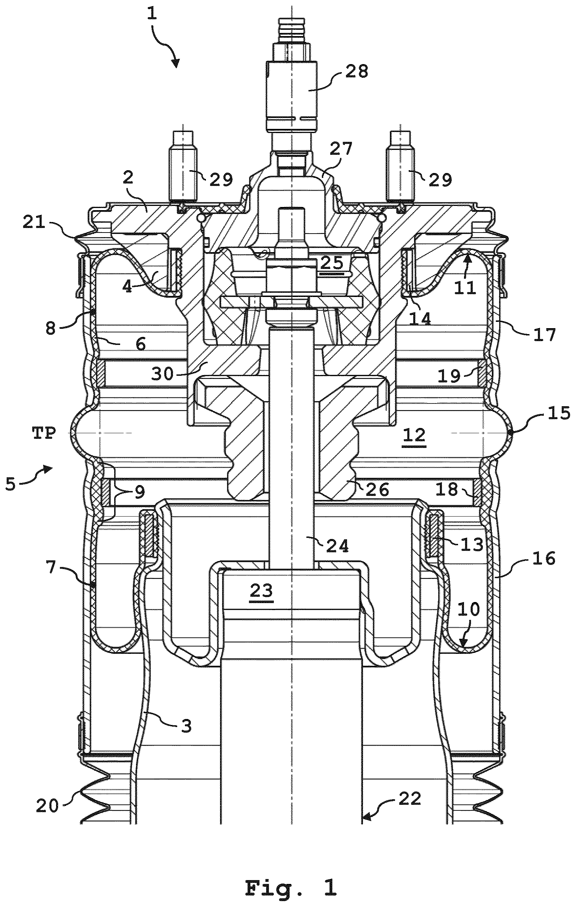

Fig. 1 zeigt eine erste beispielsgemäße Luftfedereinheit 1 mit einer Luftfeder 5 und einem integrierten Stoßdämpfer 22. Luftfedereinheit 1 kann einerseits mittels Luftfederdeckel 2 an einer Kraftfahrzeugkarosserie und anderseits mittels Stoßdämpfer 22 an einem Radträger des Kraftfahrzeugfahrwerks befestigt, wodurch das Kraftfahrzeug gefedert und gedämpft wird.

Luftfeder 5 umfasst einen Rollbalg 6 aus elastomeren Material, wobei Rollbalg 6 mit Luftfederdeckel 2 und einem Luftfederkolben 3 zumindest teilweise einen luftdichten und mit Druckluft befüllbaren Arbeitsraum 12 begrenzt. Rollbalg 6 ist an seinem axialen unteren Ende mittels eines ersten Klemmrings 13 mit Luftfederkolben 6 und an seinem axialen mittels zweiten Klemmrings 14 mit Luftfederdeckel 2 druckdicht verbunden.

Bei Relativbewegungen in axialer Richtung der Luftfedereinheit 1 zwischen Luftfederdeckel 2 und Luftfederkolben 3 rollt Rollbalg 6 unter Ausbildung einer ersten Rollfalte 10 auf der Abrollfläche des konzentrischen Luftfederkolbens 3 ab. Weiterhin bildet Rollbalg 6 eine zweite Rollfalte 11 am Luftfederdeckel 2 aus, welche an einem Ringkeil 4 abrollt und als kardanisches Lager wirkt. Durch die Form des Ringkeils 4 lassen sich verschiedene Rollkonturen für zweite Rollfalte 11 realisieren, welche das Federverhalten oder auch die Wirkung als kardanisches Lager beeinflussen. Neben der Wirkweise als kardanisches Lager, dient zweite Rollfalte 11 teilweise auch zur Torsionsaufnahme bei Verdrehung der Luftfeder 5.

Beispielsgemäß ist die Außenführung als getrennte zweiteilige Außenführung mit einem ersten unteren Außenführungsteil 16 und einem zweiten oberen Außenführungsteil 17 ausgeführt. Eine in mehr als zwei Teile segmentierte Außenführung ist ebenfalls erdenklich. Erstes Außenführungsteil 16 umschließt erste Rollfalte 10 und ist im Bereich des Luftfederkolbens 3 angeordnet, währenddessen umschließt zweites Außenführungsteil 17 zweite Rollfalte 11 und ist im Bereich des Luftfederdeckels 2 angeordnet. Erstes Außenführungsteil 16 ist mittels eines ersten Innenspannrings 18 und zweites Außenführungsteil 17 ist mittels eines zweiten Innenspannrings 19 am Rollbalg 6 befestigt. Beide Außenführungsteile 16, 17 können auch mit Rollbalg 6 verklebt werden. Außenführungsteile 16, 17 sind vorzugsweise aus Aluminium oder einem Stahl, können aber auch aus einem Kunststoff gefertigt sein.

Zugleich ist Rollbalg 6 beispielsgemäß als Hybridbalg ausgestaltet. So ist erste Rollfalte 10 und ein unterer Teil des Rollbalgs 6 im Bereich des ersten Außenführungsteils 16 als Kreuzlagenbalg 7 ausgeführt, währenddessen ist zweite Rollfalte 11 und ein oberer Teil des Rollbalgs 6 im Bereich des zweiten Außenführungsteils 17 als Axialbalg 8 ausgeführt. Im oberen Endbereich des ersten Außenführungsteils 16 bzw. im Klemmbereich mittels ersten Innenspannring 18 liegt ein Überlappungsbereich 9 von Kreuzlagenbalg 12 zu Axialbalg 13 des Rollbalgs 6 vor.

Rollbalg 6 kann auch als erweiterter Hybridbalg ausgebildet sein. Dabei ist erste Rollfalte 10 und ein unterer Teil des Rollbalgs 6 im Bereich des ersten Außenführungsteils 16 als Kreuzlagenbalg 7 ausgeführt, und ebenso ist zweite Rollfalte 11 und ein oberer Teil des Rollbalgs 6 im Bereich des zweiten Außenführungsteils 17 als Kreuzlagenbalg ausgeführt. Nur Torsionsfalte 15 ist als Axialbalg ausgeführt. In den Klemmbereichen mittels Innenspannringe 18 und 19 sind entsprechend die Überlappungsbereiche von Kreuzlagenbalg zu Axialbalg vorgesehen. Vorteilhafterweise wird somit für Torsionspunkt TP ein weicher Axialbalg mit effektiver Torsionsaufnahme und verbesserter kardanischer Auslenkung verwendet, wobei der restliche Rollbalg 6 als robuster Kreuzlagenbalg ausgeführt ist.

Im freiliegenden Bereich zwischen den beiden Außenführungsteilen 16, 17 bildet Rollbalg 6 beispielsgemäß eine Torsionsfalte 15 aus, wobei Torsionsfalte 15 als Axialbalg 8 ausgeführt ist. Somit ist im mittleren Bereich der Luftfeder 5 ein vorteilhafter Torsionspunkt TP geschaffen, welcher aufgrund der eingebetteten axialen Festigkeitsträger eine effektive Torsionsaufnahme bei Drehbewegungen der Luftfeder 5 ermöglicht.

Im Luftfederkolben 3 ist Stoßdämpfer 22 integriert, wobei Luftfederkolben 3 hohlzylinderförmig ein Dämpferrohr 23 des Stoßdämpfers umgibt und an diesem befestigt ist. Weiterhin umfasst Stoßdämpfer 22 eine Dämpferstange 24 und ist über Dämpferlager 25 in einer Lageraufnahme 30 des Luftfederdeckels 2 zentral gelagert. Am Luftfederdeckel 2 anliegend ist eine Zusatzfeder 26 unterhalb des Dämpferlagers 25 und im Arbeitsraum 12 der Luftfeder 5 angeordnet, wobei Zusatzfeder 26 hohlzylinderförmig Dämpferstange 24 umgibt und als Anschlagspuffer für Dämpferrohr 23 dient.

Vorteilhafterweise wirkt Torsionsfalte 15 auch als kardanisches Lager. Beim Verschwenken der Luftfeder wird gemäß dem Stand der Technik die untere Rollfalte gegen den Luftfederkolben gepresst, wodurch eine Kraft auf Stoßdämpfer ausgeübt wird. Die beispielsgemäße geteilte Außenführung vermindet das Verpressen der ersten Rollfalte 10 gegen Luftfederkolben 3 wesentlich. Beim Einfedern verschwenken sich beide Außenführungsteile 16, 17 mit unterschiedlichen Winkeln zueinander, wodurch erste Rollfalte 10 nur noch geringfügig bis gar nicht gegen Luftfederkolben 3 gepresst wird und damit keine nachteiligen Querkräfte auf Stoßdämpfer 22 einwirken.

Zum Schutz vor Verschmutzung der Rollfalten ist ein Faltenbalg 20 am unteren Ende der ersten Außenführungsteil 16 befestigt, welcher die erste Rollfalte 10 schützt. Ein weiterer Schutzbalg 21 ist am Luftfederdeckel 2 und am oberen Ende des zweiten Außenführungsteils 17 befestigt und schützt somit die zweite Rollfalte 11.

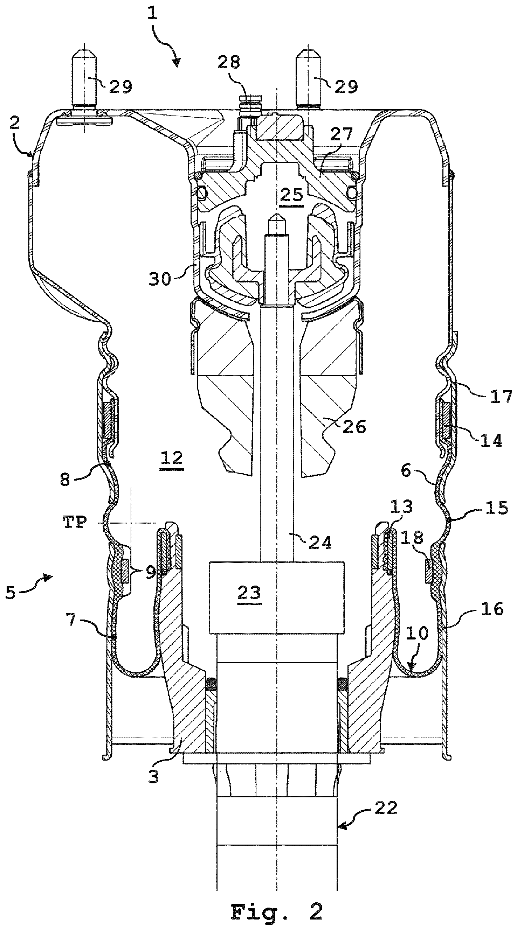

Die Fig. 2 zeigt eine zweite beispielsgemäße Luftfedereinheit 1, welche hinsichtlich der geteilten Außenführung im Wesentlichen der Luftfedereinheit aus Fig. 1 entspricht und unterscheidet sich in der Ausgestaltung des Luftfederdeckels 2.

Luftfederdeckel 2 ist als großvolumiger Deckel ausgeformt und kann aus mehreren Teilen bestehen. Rollbalg 6 ist in diesem Ausführungsbeispiel ohne Ausbildung einer oberen Rollfalte mittels zweiten Klemmring 14 an Luftfederdeckel 2 befestigt. Am Luftfederkolben 3 rollt Rollbalg 6 mit Rollfalte 10 ab. Erstes Außenführungsteil 16 umschließt Rollfalte 10 und ist im Bereich des Luftfederkolbens 3 angerordnet, währenddessen ist zweites Außenführungsteil 16 radial um die Klemmung 14 vorgesehen und umschließt einen oberen Teil des Rollbalges, sowie einen unteren Teil des Luftfederdeckels 2. D.h. zweites Außenführungsteil liegt von außen zu einem am Luftfederdeckel 2 und zum anderen am Rollbalg 6 an. Bei dieser Befestigungsvariante wird auf einen Innenspanring verzichtet.

Wie auch in dem Ausführungsbeispiel gemäß Fig. 1 bildet sich zwischen beiden Außenführungsteilen 16, 17 die Torsionsfalte 15 mit Torsionspunkt TP auf, welche zusätzlich als kardanisches Lager wirksam ist. Zugleich ist Rollbalg 6 ebenfalls wie in Fig. 1 als Hybridbalg ausgebildet oder kann auch als erweiterter Hybridbalg ausgebildet sein.

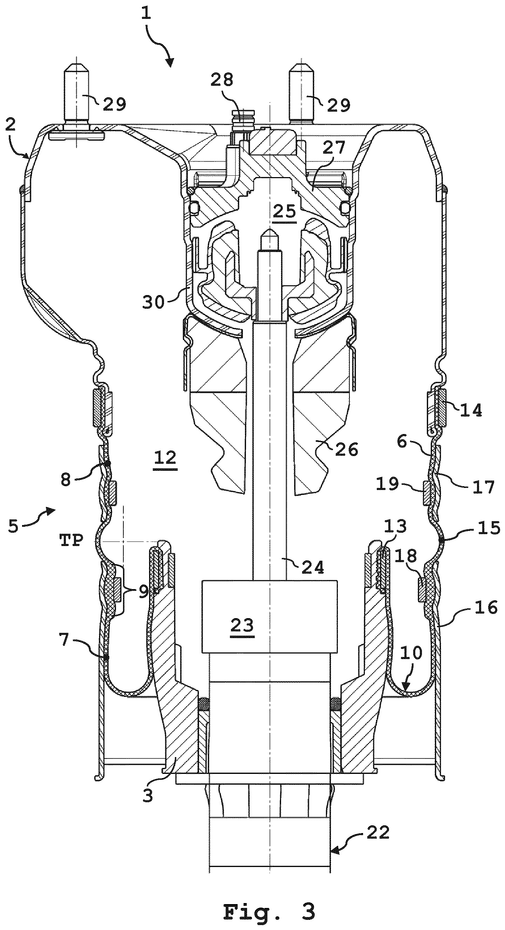

In Fig. 3 ist eine dritte beispielsgemäße Luftfedereinheit 1 gezeigt, welche sich hinsichtlich der Ausgestaltung des zweiten Außenführungsteil 17 zu der Luftfedereinheit aus Fig. 2 unterscheidet. In dieser Befestigungsvariante wird zweites Außenführungsteil 17 mittels zweiten Innenspannring 19 befestigt und ist unterhalb der Klemmung 14 vorgesehen.

### Bezugszeichenliste

- 1: Luftfedereinheit
- 2: Luftfederdeckel
- 3: Luftfederkolben
- 4: Ringkeil
- 5: Luftfeder
- 6: Rollbalg
- 7: Kreuzlagenbalg
- 8: Axialbalg
- 9: Überlappungsbereich
- 10: erste Rollfalte
- 11: zweite Rollfalte
- 12: Arbeitsraum
- 13: erster Klemmring
- 14: zweiter Klemmring
- 15: Torsionsfalte
- 16: erstes Außenführungsteil
- 17: zweites Außenführungsteil
- 18: erster Innenspannring
- 19: zweiter Innenspannring
- 20: Faltenbalg
- 21: Schutzbalg
- 22: Stoßdämpfer
- 23: Dämpferrohr
- 24: Dämpferstange
- 25: Dämpferlager
- 26: Zusatzfeder
- 27: Verschlusskappe
- 28: Luftanschluss
- 29: Befestigungselement
- 30: Lageraufnahme
- TP: Torsionspunkt

## Patentansprüche

1. Luftfedereinheit (1) für ein Fahrwerk eines Kraftfahrzeugs umfassend einen Luftfederdeckel (2) und einen Luftfederkolben (3), wobei zwischen dem Luftfederdeckel (2) und dem Luftfederkolben (3) ein luftdicht befestigter Rollbalg (6) aus elastomerem Material teilweise einen mit Druckluft befüllbaren Arbeitsraum (12) begrenzt, wobei der Rollbalg (6) von einer geteilten hülsenförmigen Außenführung mit einem ersten Außenführungsteil (16) und einem zweiten Außenführungsteil (17) umschlossen ist, **dadurch gekennzeichnet, dass** der Rollbalg (6) zwischen dem ersten und dem zweiten Außenführungsteil (16, 17) eine Torsionsfalte (15) ausbildet.

2. Luftfedereinheit (1) nach Anspruch 1, **dadurch gekennzeichnet, dass** der Rollbalg (6) im Bereich der Torsionsfalte (15) als Axialbalg (8) ausgebildet ist.

3. Luftfedereinheit (1) nach Anspruch 2, **dadurch gekennzeichnet, dass** der Rollbalg (6) als erweiterter Hybridbalg mit einem Kreuzlagenbalg im Bereich des ersten und des zweiten Außenführungsteils (16, 17) ausgebildet ist, wobei der Rollbalg (6) im Bereich der Torsionsfalte (15) als Axialbalg ausgebildet ist.

4. Luftfedereinheit (1) nach Anspruch 1 oder 2, **dadurch gekennzeichnet, dass** der Rollbalg (6) als Hybridbalg mit einem Kreuzlagenbalg (7) im Bereich des ersten Außenführungsteils (16) und mit einem Axialbalg (8) im Bereich des zweiten Außenführungsteils (17) ausgebildet ist.

5. Luftfedereinheit (1) nach einem der Ansprüche 1 bis 4, **dadurch gekennzeichnet, dass** das erste Außenführungsteil (16) mittels eines ersten Innenspannrings (18) und/oder das zweite Außenführungsteil (17) mittels eines zweiten Innenspannrings (19) am Rollbalg (6) befestigbar sind.

6. Luftfedereinheit (1) nach einem der Ansprüche 1 bis 5, **dadurch gekennzeichnet, dass** das erste Außenführungsteil (16) und/oder das zweite Außenführungsteil (17) mit dem Rollbalg (6) verklebt sind.

7. Luftfedereinheit (1) nach einem der Ansprüche 1 bis 6, **dadurch gekennzeichnet, dass** das erste Außenführungsteil (16) in einem Bereich einer ersten Rollfalte (10) des Rollbalgs (6) an dem Luftfederkolben (3) vorgesehen ist.

8. Luftfedereinheit (1) nach einem der Ansprüche 1 bis 7, **dadurch gekennzeichnet, dass** das zweite Außenführungsteil (17) in einem Bereich einer zweiten Rollfalte (11) des Rollbalgs (6) an dem Luftfederdeckel (2) vorgesehen ist.

9. Luftfedereinheit (1) nach einem der Ansprüche 1 bis 7, **dadurch gekennzeichnet, dass** das zweite Außenführungsteil (17) einen Teil des Luftfederdeckels (2) und einen Teil des Rollbalgs (6) gemeinsam umschließt.

10. Luftfedereinheit (1) nach einem der Ansprüche 1 bis 7, **dadurch gekennzeichnet, dass** der Rollbalg (6) mittels einer Klemmung (14) an dem Luftfederdeckel (2) befestigt ist, wobei das zweite Außenführungsteil (17) zwischen der Klemmung (14) und dem ersten Außenführungsteil (16) angeordnet ist.

11. Luftfedereinheit (1) nach einem der Ansprüche 1 bis 10, **dadurch gekennzeichnet, dass** die Luftfedereinheit (1) einen integrierten Stoßdämpfer (22) umfasst, wobei das zweite Außenführungsteil (16) beim Einfedern der Luftfedereinheit (1) im Wesentlichen parallel zum Stoßdämpfer (22) ausgerichtet bleibt.

12. Fahrwerk für ein Kraftfahrzeug, insbesondere ein Luftfedersystem, mit einer Luftfedereinheit (1) nach einem der Ansprüche 1 bis 11.

## Claims

1. Air spring unit (1) for a running gear of a motor vehicle, said air spring unit (1) comprising an air spring cover (2) and an air spring piston (3), wherein a rolling lobe bellows (6), which is from an elastomer material and is fastened in an airtight manner between the air spring cover (2) and the air spring piston (3), partially delimits an operating space (12) which is capable of being filled with compressed air, wherein the rolling lobe bellows (6) is enclosed by a divided sleeve-shaped external guide having a first external guide part (16) and a second external guide part (17), **characterized in that** the rolling lobe bellows (6) between the first and the second external guide part (16, 17) configures a torsion pleat (15).

2. Air spring unit (1) according to Claim 1, **characterized in that** the rolling lobe bellows (6) in the region of the torsion pleat (15) is configured as an axial bellows (8).

3. Air spring unit (1) according to Claim 2, **characterized in that** the rolling lobe bellows (6) is configured as an extended hybrid bellows having a cross-ply bellows in the region of the first external guide part (16) and the second external guide part (17), wherein the rolling lobe bellows (6) in the region of the torsion pleat (15) is configured as an axial bellows.

4. Air spring unit (1) according to Claim 1 or 2, **characterized in that** the rolling lobe bellows (6) is configured as a hybrid bellows having a cross-ply bellows (7) in the region of the first external guide part (16) and an axial bellows (8) in the region of the second external guide part (17).

5. Air spring unit (1) according to one of Claims 1 to 4, **characterized in that** the first external guide part (16) by means of a first internal tension ring (18) and/or the second external guide part (17) by means of a second internal tension ring (19) are/is fastenable to the rolling lobe bellows (6).

6. Air spring unit (1) according to one of Claims 1 to 5, **characterized in that** the first external guide part (16) and/or the second external guide part (17) are/is adhesively bonded to the rolling lobe bellows (6) .

7. Air spring unit (1) according to one of Claims 1 to 6, **characterized in that** the first external guide part (16) is provided on the air spring piston (3) in a region of a first rolling lobe pleat (10) of the rolling lobe bellows (6).

8. Air spring unit (1) according to one of Claims 1 to 7, **characterized in that** the second external guide part (17) is provided on the air spring cover (2) in a region of a second rolling lobe pleat (11) of the rolling lobe bellows (6).

9. Air spring unit (1) according to one of Claims 1 to 7, **characterized in that** the second external guide part (17) collectively encloses part of the air spring cover (2) and part of the rolling lobe bellows (6).

10. Air spring unit (1) according to one of Claims 1 to 7, **characterized in that** the rolling lobe bellows (6) by means of a clamp-fit (14) is fastened to the air spring cover (2), wherein the second external guide part (17) is disposed between the clamp-fit (14) and the first external guide part (16).

11. Air spring unit (1) according to one of Claims 1 to 10, **characterized in that** the air spring unit (1) comprises an integrated shock absorber (22), wherein the second external guide part (16) when compressing the air spring unit (1) remains so as to be aligned substantially parallel with the shock absorber (22).

12. Running gear for a motor vehicle, in particular an air spring system, having an air spring unit (1) according to one of Claims 1 to 11.

## Revendications

1. Unité de ressort pneumatique (1) pour un châssis de véhicule automobile, comprenant un couvercle de ressort pneumatique (2) et un piston de ressort pneumatique (3), une membrane roulante (6) en matériau élastomère fixée de manière étanche à l'air entre le couvercle de ressort pneumatique (2) et le piston de ressort pneumatique (3) délimitant partiellement une chambre de travail (12) pouvant être remplie d'air sous pression, la membrane roulante (6) étant entourée par un guidage externe divisé en forme de manchon comportant une première partie de guidage externe (16) et une deuxième partie de guidage externe (17), **caractérisée en ce que** la membrane roulante (6) forme un pli de torsion (15) entre la première et la deuxième partie de guidage extérieur (16, 17).

2. Unité de ressort pneumatique (1) selon la revendication 1, **caractérisée en ce que** la membrane roulante (6) est configurée sous la forme d'une membrane axiale (8) dans la zone du pli de torsion (15) .

3. Unité de ressort pneumatique (1) selon la revendication 2, **caractérisée en ce que** la membrane roulante (6) est configurée sous la forme d'une membrane hybride élargie comportant une membrane à couches croisées dans la zone de la première et de la deuxième partie de guidage extérieur (16, 17), la membrane roulante (6) étant configurée sous la forme d'une membrane axiale dans la zone du pli de torsion (15) .

4. Unité de ressort pneumatique (1) selon la revendication 1 ou 2, **caractérisée en ce que** la membrane roulante (6) est configurée sous la forme d'une membrane hybride comportant une membrane à couches croisées (7) dans la zone de la première partie de guidage extérieur (16) et comportant une membrane axiale (8) dans la zone de la deuxième partie de guidage extérieur (17).

5. Unité de ressort pneumatique (1) selon l'une quelconque des revendications 1 à 4, **caractérisée en ce que** la première partie de guidage extérieur (16) peut être fixée à la membrane roulante (6) au moyen d'un premier anneau de serrage intérieur (18) et/ou la deuxième partie de guidage extérieur (17) au moyen d'un deuxième anneau de serrage intérieur (19)

6. Unité de ressort pneumatique (1) selon l'une quelconque des revendications 1 à 5, **caractérisée en ce que** la première partie de guidage extérieur (16) et/ou la deuxième partie de guidage extérieur (17) sont collées avec la membrane roulante (6).

7. Unité de ressort pneumatique (1) selon l'une quelconque des revendications 1 à 6, **caractérisée en ce que** la première partie de guidage extérieur (16) est prévue dans une zone d'un premier pli roulant (10) de la membrane roulante (6) sur le piston de ressort pneumatique (3).

8. Unité de ressort pneumatique (1) selon l'une quelconque des revendications 1 à 7, **caractérisée en ce que** la deuxième partie de guidage extérieur (17) est prévue dans une zone d'un deuxième pli roulant (11) de la membrane roulante (6) sur le couvercle de ressort pneumatique (2).

9. Unité de ressort pneumatique (1) selon l'une quelconque des revendications 1 à 7, **caractérisée en ce que** la deuxième partie de guidage extérieur (17) entoure conjointement une partie du couvercle de ressort pneumatique (2) et une partie de la membrane roulante (6).

10. Unité de ressort pneumatique (1) selon l'une quelconque des revendications 1 à 7, **caractérisée en ce que** la membrane roulante (6) est fixée au moyen d'un dispositif de blocage (14) sur le couvercle de ressort pneumatique (2), la deuxième partie de guidage extérieur (17) étant agencée entre le dispositif de blocage (14) et la première partie de guidage extérieur (16) .

11. Unité de ressort pneumatique (1) selon l'une quelconque des revendications 1 à 10, **caractérisée en ce que** l'unité de ressort pneumatique (1) comprend un amortisseur intégré (22), la deuxième partie de guidage extérieur (16) restant orientée essentiellement en parallèle de l'amortisseur (22) lors de la compression de l'unité de ressort pneumatique (1).

12. Châssis pour un véhicule automobile, notamment système à ressort pneumatique, comprenant une unité de ressort pneumatique (1) selon l'une quelconque des revendications 1 à 11.
